# EUROPEAN PATENT SPECIFICATION

(11) **EP 0 467 121 B1**
(45) Date of publication and mention of the grant of the patent: **18.01.1995**
(21) Application number: 91110586.4
(22) Date of filing: 26.06.1991
(51) Int. Cl.: H02K 11/00

(54) **A capacitive filter arrangement**
Kapazitive Filteranordung
Arrangement de filtre capacitif

(30) Priority: 17.07.1990 IT 1248590
(43) Date of publication of application: 22.01.1992
(73) Proprietor: ANSALDO ENERGIA S.P.A., I-16152 Genova (IT)
(72) Inventor: Varesano, Giorgio, I-16032 Rapallo-Genova (IT); Lanteri, Carlo, I-18020 Cosio D'Arroscia - Imperia (IT)
(74) Representative: Perani, Aurelio

(56) References cited:
- CH-A- 663 697
- US-A- 4 384 223
- CIGRE, INTERNATIONAL CONFERENCE ON LARGE HIGH VOLTAGE ELECTRIC SYSTEMS, 28 August 1988, Paris, FR, pp. 1-6 ; A. MEYER et al. : "Shaft voltages in turbosets : recent development of a new grounding design to improve the reliability of the bearings".

## Description

The subject-matter of the present invention is a capacitive filter arrangement for removing impulsive shaft voltages as brought about by thyristor-bridge static excitation systems.

The shaft voltage phenomenon is of great importance to the assessment of malfunctions in turbo-alternators of large size.

In fact, in these machines, and due to different causes shaft voltages may attain high impulsive values which are responsible for a number of different failures.

Shaft voltages may be classed as follows:
(a) Shaft voltages caused by electrostatic charges. This (DC) voltage type is due to the water droplets invariably present in the steam flow impinging on the turbine blades. Wherever effective grounding devices are lacking, these voltages may reach high values and be discharged to the ground along such preferential paths as the oil film over the bearings.
(b) Shaft voltages due to magnetic dissymmetries. This (AC) voltage type is mainly attributable to geometric eccentricities of the rotor: lacking any effective provisions, such voltages may drive a large current flow through the shaft which is discharged via the bearings, thereby the latter are liable to suffer damage.
(c) Shaft voltages due to magnetic retentivity. Such (DC) voltages are brought about by the presence of residual magnetic fluxes which loop through the shaft, the bearings, and the generator bed. This magnetic retentivity is due, in turn, to different causes, among which the magnetization of the turbine blades following non-destructive testing.
(d) Shaft voltages due to static excitation systems. These shaft voltages have a high-peak impulsive character and are due to the field voltage rectifying system using thyristors, and to capacitive couplings between the excitation winding and the shaft of the generator.

An intensive series of measurements taken on large-size generators, enabled the extent, of the shaft voltages brought about by such different factors to be assessed, both quantitatively and qualitatively.

It at once became apparent that, in agreement with what the state of the art suggests, these objectionable shaft voltages could be reduced, or at least their effects attenuated, by using capacitive filter means connected between the brushes and an effective ground clamp.

This approach is for instance disclosed in A-MEYER ET AL "shaft voltages in turbo sets: recent development of a new grounding design to improve the reliability of the bearings" published in CIGRE, INTERNATIONAL CONFERENCE ON LARGE HIGH VOLTAGE ELECTRIC SYSTEMS, 28 August 1988, PARIS (pages 1-6) and in CH-A-663697 as well.

However, a series of tests carried out with such capacitive filters have yielded markedly contradictory results, which are difficult to account for.

In particular, it has been observed that for a given set of functional features, the effectiveness of the aforesaid capacitive filters varied considerably with the construction of the machine and different positioning of the capacitive filters.

It is the object of the present invention to obviate such a problem and secure positive advantages from the application of capacitive filters, irrespective of the functional and constructional features of a machine of interest.

According to the invention, this result has been achieved by having capacitive filters arranged in parallel between a ground clamp, on the one side, and the brush holders, on the other side.

This type of an electrical link has been known in its broadest aspects. But it can be only made truly effective, according to the invention, by reducing the parallel electrical connections between the capacitive filters and the brush holders to a minimum; that is, by actually having said capacitive filters mounted directly on the brush holders, within the so-called rings' chamber which surrounds the rings fitted to the shaft, the brushes and their ring-like holders.

The invention features are summarized and schematized in the claims; the subject-matter and advantages thereof will also become apparent from the following detailed description, to be read in conjunction with the accompanying drawings, wherein:
Figure 1 shows, in a much schematized manner a side view with some parts cut away of the rings' chamber of the shaft of an alternator;
Figure 2 shows a wiring diagram for the capacitive filters employed in the claimed arrangement; and
Figure 3 is a side view of the brush holders associated with the claimed arrangement.

With specific reference made to the above-listed drawing figures, shown at 10 is the shaft of an alternator at the location of the rings' chamber 20, which chamber comprises a casing supported on the alternator bed 30.

Provided inside the rings' chamber 20 are two slip rings 41 and 42, being rotatively rigid with the shaft 10 but, of course, electrically isolated therefrom.

Arranged to rub over the slip rings are a ring-like arrangement of brushes 45 and 46 which are suitably supported around the shaft 10 by the way of corresponding ring-like holders 43 and 44.

Shaft voltages which, for the reasons already hereinabove given, are established between the shaft 10 and the bed 30 tend to discharge themselves via the shaft 10 bearings, not shown in the drawings.

Removal of the impulsive shaft voltages, or at least their attenuation as may suffice to cancel their adverse effects, can be accomplished through capacitive filters C1, C2, C3, C4 or C1-2, C3-4, disposed between the brushes 45 and 46, through their holders 43 and 44, on the one side, and an effective ground clamp 131 connected to the bed 30, on the other side.

It has been mentioned previously that this electrical arrangement, while theoretically indefective, fails to also provide invariably good results when applied to machines of different types.

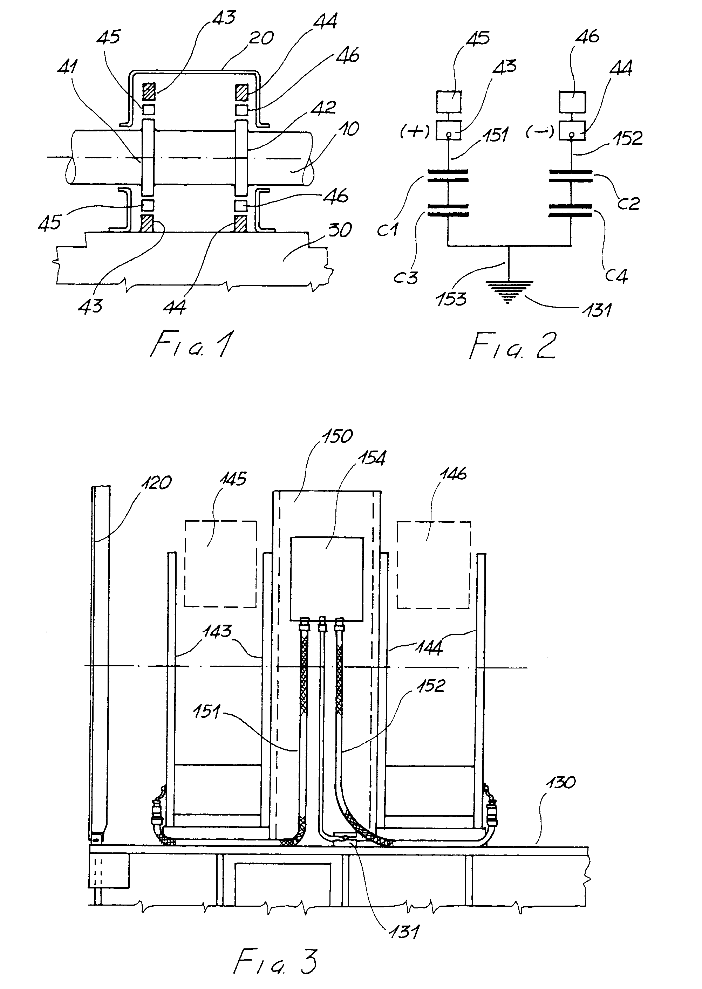

In the filter arrangement of this invention, the electrical connections between the capacitive filters and the brush holders are made as short as possible, which requires that the arrangement be mounted inside the rings' chamber between the two brush holders, as shown in Figure 3.

From this Figure, the alternator shaft has been omitted for clarity. Shown are, however, the casing 120 of the rings chamber, the bed 130, and the holders 143, 144 for the brushes 145, 146.

As can be seen the holders 143 and 144 are each comprised of a pair of ring-like plates which encircle the shaft, are supported on the bed 130, and in turn, carry the set of brushes 145 and 146.

In accordance with the invention, the capacitive filter arrangement is mounted to a support 150 carried on the brush holders 143, 144, thereby the electrical connections 151 and 152 can have the shortest possible length.

Likewise, connection 153 between the capacitive filters and the ground clamp 131 can also have the shortest possible length.

Shown in Figure 3 is a case 154 mounted to the support 150 and accommodating on its inside the capacitors C1 to C4 of the capacitive filters.

A number of tests carried out on a range of different machines have proved the unfailing effectiveness of the claimed arrangement.

## Claims

1. A capacity filter arrangement for removing impulsive shaft voltages from a turbo-alternator, being of a type which comprises pairs or a single capacitors (C1,C2,C3,C4) connected in parallel between, on the one side, the supply brushes (45,46) for the excitation winding, and on the other side, a ground clamp (131), characterized in that said capacitors (C1,C2,C3,C4) are mounted between the brush (145,146) holders (143,144) to thereby minimize the length of the connecting leads (151,152,153) between said capacitors and brushes (145,146) on the one side and between said capacitors and ground clamp (131) on the other side.

2. A capacitive filter arrangement for removing impulsive shaft voltages according to the preceding claim, wherein said brush holders comprise pairs or ring-like plates (143,144) supported on the turbo-alternator bed (130), characterized in that said capacitors (C1 to C4) are carried on a support base (150) located between the contiguous members of two pairs or ring-like plates (143,144) forming the brush holders which carry the brushes (145,146).

3. A capacitive filter arrangement for removing impulsive shaft voltages according to Claim 1, wherein said brush holders comprise pairs of ring-like plates (143,144) supported on the turbo-alternator bed (130) characterized in that said capacitors are carried on a support base (150) located between the continuous members of the two pairs of ring-like plates (143,144) forming the brush holders which carry the brushes (145,146) and contained inside a protective casing (154).

## Patentansprüche

1. Kapazitive Filteranordnung zur Entfernung impulsförmiger Wellenspannungen von einem Turbo-Synchrongenerator, der von der Art ist, die Paare von oder einzelne Kondensatoren (C1, C2, C3, C4) umfaßt, die parallel angeschlossen sind zwischen den Versorgungsbürsten (45, 46) für die Erregerwindung auf der einen Seite und einer Erdungsklemme (131) auf der anderen Seite, dadurch gekennzeichnet, daß die Kondensatoren (C1, C2, C3, C4) zwischen den Bürsten (145, 146) -haltern (143, 144) befestigt sind, um dadurch die Länge der Verbindungsleitungen (151, 152, 153) zwischen den Kondensatoren und den Bürsten (145, 146) auf der einen Seite und zwischen den Kondensatoren und der Bodenklemme (131) auf der anderen Seite zu minimieren.

2. Kapazitive Filteranordnung zur Entfernung impulsförmiger Wellenspannungen nach dem voranstehenden Anspruch, bei der die Bürsenhalter paarweise oder ringförmige Platten (143, 144) umfassen, die auf dem Untergestell (130) des Turbo-Synchrongenerators angebracht sind, dadurch gekennzeichnet, daß die Kondensatoren (C1-C4) auf einem Stützsockel (150) getragen werden, der zwischen den benachbarten Gliedern von zwei Paaren von ringförmigen Platten (143, 144) gelegen sind, die die die Bürsten (145, 146) tragenden Bürstenhalter bilden.

3. Kapazitive Filteranordnung zur Entfernung impulsförmiger Wellenspannungen nach Anspruch 1, bei der die Bürstenhalter Paare von ringförmigen Platten (143, 144) umfassen, die auf dem Untergestell (130) des Turbo-Synchrongenerators angebracht sind, dadurch gekennzeichnet, daß die Kondensatoren von einem Stützsockel (150) getragen werden, der zwischen den benachbarten Gliedern der zwei Paare von ringförmigen Platten, die Bürstenhalter bildenden Platten (143, 144) gelegen ist, die die Bürsten (145, 146) tragen und im Inneren eines schützendes Gehäuses (154) gehalten werden.

## Revendications

1. Dispositif de filtrage capacitif pour éliminer des tensions d'arbre pulsatoires d'un turboalternateur, du type comprenant des paires ou de simples condensateurs (C1, C2, C3, C4), reliés en parallèle, d'un côté, à des balais d'alimentation (45,46) du bobinage d'excitation et, de l'autre côté, à une prise de masse (131), caractérisé en ce que lesdits condensateurs (C1, C2, C3, C4) sont montés entre les porte-balais (143,144), de manière à minimiser la longueur des connexions de liaison (151,152,153) entre lesdits condensateurs et les balais (145,146), d'un côté,et entre lesdits condensateurs et la prise de masse (131), de l'autre côté.

2. Dispositif de filtrage capacitif pour éliminer des tensions d'arbre pulsatoires selon la revendication précédente, dans lequel lesdits porte-balais comprennent des paires de plaques annulaires (143,144) supportées sur le banc du turboalternateur (130), caractérisé en ce que lesdits condensateurs (C1 à C4) sont montés sur une base support (150) située entre les organes contigus de deux paires d'organes annulaires (143,144) constituant les porte-balais portant les balais (145,146).

3. Dispositif de filtrage capacitif pour éliminer des tensions d'arbre pulsatoires selon la revendication 1, dans lequel lesdits porte-balais comprennent des paires de plaques annulaires (143,144) portées par le banc du turboalternateur (130), caractérisé en ce que lesdits condensateurs sont montés sur une base support (150) située entre les organes contigus des deux paires de plaques annulaires (143,144) constituant les porte-balais portant les balais (145,146) et se trouvant à l'intérieur d'un boîtier protecteur (154).
